# EUROPEAN PATENT APPLICATION

(11) **EP 4 277 305 A1**
(43) Date of publication of application: **15.11.2023**
(21) Application number: 22736529.3
(22) Date of filing: 05.01.2022
(51) Int. Cl.: H04W 4/06

(54) **PATH PROCESSING METHOD AND APPARATUS, AND TERMINAL, NETWORK DEVICE AND STORAGE MEDIUM**

(30) Priority: 08.01.2021 CN 202110024613
(71) Applicant: Vivo Mobile Communication Co., Ltd., Dongguan, Guangdong 523863 (CN)
(72) Inventor: LIU, Jiamin, Dongguan, Guangdong 523863 (CN)
(74) Representative: Winter, Brandl - Partnerschaft mbB
(86) International application number: PCT/CN2022/070272
(87) International publication number: WO 2022/148367

(57) **Abstract**

This application provides a path processing method and apparatus, a terminal, a network device, and a storage medium. The method includes: obtaining, by a terminal, first indication information; and performing, by the terminal, path reconfiguration for a multicast service according to the first indication information.

## Description

### CROSS-REFERENCE TO RELATED APPLICATIONS

This application claims priority to Chinese Patent Application No. 202110024613.9, filed in China on January 08, 2021, which is incorporated herein by reference in its entirety.

### TECHNICAL FIELD

This application relates to the field of communications technologies, and in particular, to a path processing method and apparatus, a terminal, a network device, and a storage medium.

### BACKGROUND

Some communications systems support multicast services, but currently, terminals use fixed paths for multicast services, meaning that the path used by the terminal for multicast services is unchangeable. For example, the terminal always uses the point-to-point (Point To Point, PTP) path for multicast services, or the terminal always uses the point-to-multipoint (Point To Multipoint, PTM) path for multicast services. The path used by the terminal for multicast services is unchangeable, and this results in poor multicast service capability of the terminal.

### SUMMARY

Embodiments of this application provide a path processing method and apparatus, a terminal, a network device, and a storage medium that can solve the problem of poor multicast service capability of the terminal.

According to a first aspect, an embodiment of this application provides a path processing method including:
obtaining, by a terminal, first indication information; and
performing, by the terminal, path reconfiguration for a multicast service according to the first indication information.

According to a second aspect, an embodiment of this application provides a path processing method including:
transmitting, by a network device, first indication information, where the first indication information is used for performing path reconfiguration for a multicast service by a terminal.

According to a third aspect, an embodiment of this application provides a path processing apparatus including:
an obtaining module configured to obtain first indication information; and
an execution module configured to perform path reconfiguration for a multicast service according to the first indication information.

According to a fourth aspect, an embodiment of this application provides a path processing apparatus including:
a transmitting module configured to transmit first indication information, where the first indication information is used for performing path reconfiguration for a multicast service by a terminal.

According to a fifth aspect, an embodiment of this application provides a terminal including a memory, a processor, and a program or instructions stored in the memory and capable of running on the processor, where when the program or instructions are executed by the processor, the steps of the path processing method on the terminal side provided in the embodiments of this application are implemented.

According to a sixth aspect, an embodiment of this application provides a network device, including a memory, a processor, and a program or instructions stored in the memory and capable of running on the processor, where when the program or instructions are executed by the processor, the steps of the path processing method on the network device side provided in the embodiments of this application are implemented.

According to a seventh aspect, an embodiment of this application provides a readable storage medium, where a program or instructions are stored in the readable storage medium, and when the program or instructions are executed by a processor, the steps of the path processing method on the terminal side provided in the embodiments of this application are implemented; or when the program or instructions are executed by a processor, the steps of the path processing method on the network device side provided in the embodiments of this application are implemented.

According to an eighth aspect, an embodiment of this application provides a chip, including a processor and a communications interface, where the communications interface is coupled to the processor, and the processor is configured to run a program or instructions of a network device to implement the steps of the path processing method on the terminal side provided in the embodiments of this application or the steps of the path processing method on the network device side provided in the embodiments of this application.

According to a ninth aspect, an embodiment of this application provides a computer program product, which is stored in a non-volatile storage medium, and which is executed by at least one processor to implement the steps of the path processing method on the terminal side provided in an embodiment of this application or the steps of the path processing method on the network device side provided in the embodiments of this application.

In the embodiments of this application, a terminal obtains first indication information, and the terminal performs path reconfiguration for a multicast service according to the first indication information. This enables the terminal to reconfigure a path for the multicast service, thereby improving the multicast service capability of the terminal.

### BRIEF DESCRIPTION OF DRAWINGS

FIG. 1 is a block diagram of a wireless communications system to which embodiments of this application are applicable;
FIG. 2 is a flowchart of a path processing method according to an embodiment of this application;
FIG. 3 is a schematic diagram of activation or configuration time according to an embodiment of this application;
FIG. 4 is a flowchart of another path processing method according to an embodiment of this application;
FIG. 5 is a structural diagram of a path processing apparatus according to an embodiment of this application;
FIG. 6 is a structural diagram of another path processing apparatus according to an embodiment of this application;
FIG. 7 is a structural diagram of a terminal according to an embodiment of this application; and
FIG. 8 is a structural diagram of a network device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application shall fall within the protection scope of this application.

The terms "first", "second", and the like in the specification and claims of this application are used to distinguish between similar objects rather than to describe a specific order or sequence. It should be understood that the data used in this way is interchangeable in appropriate circumstances such that the embodiments of this application can be implemented in other orders than the order illustrated or described herein. In addition, objects distinguished by "first" and "second" are generally of a same type, and the quantities of the objects are not limited. For example, there may be one or more first objects. In addition, in this specification and claims, "and/or" indicates at least one of the connected objects, and the character "/" generally indicates an "or" relationship between the contextually associated objects.

It is worth noting that the technologies described in the embodiments of this application are not limited to long term evolution (Long Term Evolution, LTE)/LTE-Advanced (LTE-Advanced, LTE-A) systems, but may also be used in other wireless communications systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. However, in the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communications system.

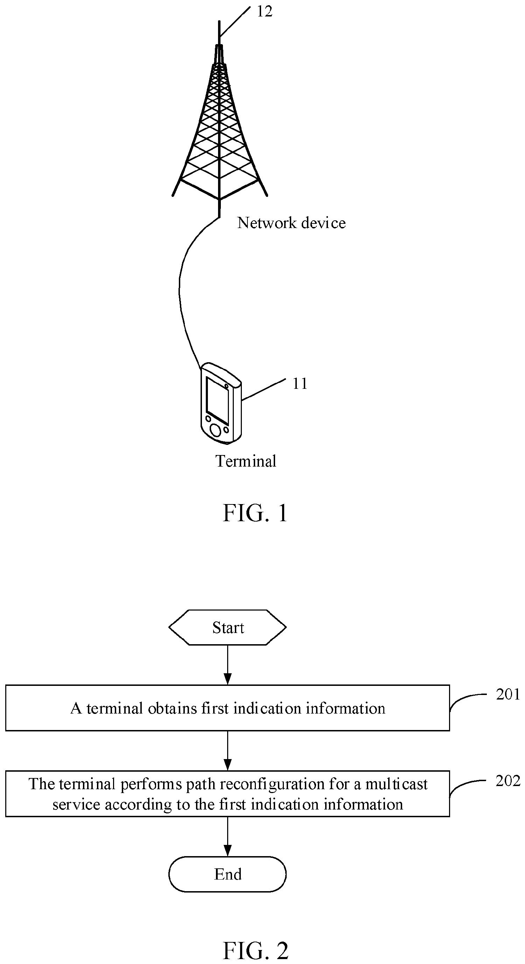

FIG. 1 is a block diagram of a wireless communications system to which the embodiments of this application are applicable. The wireless communications system includes a terminal 11 and a network device 12. The terminal 11 may also be referred to as a terminal device or user equipment (User Equipment, UE), and the terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (Ultra-Mobile Personal Computer, UMPC), a mobile Internet device (Mobile Internet Device, MID) or vehicle user equipment (Vehicle User Equipment, VUE), pedestrian user equipment (Pedestrian User Equipment, PUE), or a research electronic data capture (Research Electronic Data Capture, RedCap). The RedCap UE may include a wearable device, an industrial sensor, a video monitoring device, and so on. The wearable device includes a wrist band, earphones, glasses, or the like. It should be noted that the terminal 11 is not limited to any particular type in the embodiments of this application.

The network device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a WLAN (Wireless Local Area Network, WLAN) access point, a wireless fidelity (Wireless Fidelity, Wi-Fi) node, a transmission reception point (Transmitting Receiving Point, TRP), or some other appropriate terms in the art. The base station is not limited to a specific technical term as long as the same technical effect is achieved. It should be noted that the base station in the NR system is taken merely as an example in the embodiments of this application, but the base station is not limited to any specific type.

Additionally, the embodiments of this application can be applied to scenarios that support multicast (multicast) feature, for example: public safety and mission critical (public safety and mission critical), V2X applications (V2X applications), transparent IPv4/IPv6 multicast delivery (transparent IPv4/IPv6 multicast delivery), IPTV, software delivery over wireless (software delivery over wireless), group communications and IoT applications (group communications and IoT applications), and the like that supports the multicast feature.

With reference to the accompanying drawings, the following describes in detail, by using specific embodiments and application scenarios thereof, a path processing method and apparatus, a terminal, a network device, and a storage medium provided in the embodiments of this application.

Referring to FIG. 2, FIG. 2 is a flowchart of a path processing method according to an embodiment of this application. As shown in FIG. 2, the method includes the following steps.

Step 201. A terminal obtains first indication information.

The first indication information can be first indication information obtained by the terminal from a network device. The first indication information can be used for performing path reconfiguration for a multicast service by the terminal, that is, if the terminal obtains the first indication information, then it performs the path reconfiguration for a multicast service. For example: the first indication information includes path information, so the terminal reconfigures a path of a multicast service to a path corresponding to the path information. For example, the path information may be path state information, or the path of the multicast service is reconfigured to a path state corresponding to the path state information, or the path information can be path identification information, such as reconfiguring the path of the multicast service to a path corresponding to the path identification information; or, the first indication information includes the identification information of the multicast service, so the terminal performs path reconfiguration for a multicast service according to the identification information.

Step 202. The terminal performs path reconfiguration for a multicast service according to the first indication information.

The multicast service can be a multicast broadcast service (Multicast Broadcast Service, MBS) or a multimedia broadcast and multicast service (Multimedia Broadcast and Multicast Service, MBMS). And the multicast service can refer to one or more multicast services.

The path reconfiguration for implementing multicast services can be either reconfiguring the path state of multicast services to the path state indicated by the first indication information or reconfiguring the path state of multicast services to a pre-configured path state.

In the embodiments of this application, the above steps can be used to achieve path reconfiguration for a multicast service by the terminal, thereby improving the multicast service capability of the terminal and also beneficial for enhancing the quality of service (Quality of Service, QoS) and transmission efficiency of the terminal. Moreover, it can improve the multicast service receiving experience of the terminal on the basis of ensuring system efficiency.

In an optional embodiment, the performing path reconfiguration for a multicast service includes:
reconfiguring a path state of the multicast service to a target path state.

The target path state mentioned above can be a path state indicated by the first indication information, or, the target path state can be a pre-configured or protocol-agreed path state.

For example, the target path state may include one of the following:
only point-to-multipoint (Point to Multipoint, PTM) path being activated or configured;
only point-to-point (Point to Point, PTP) path being activated or configured;
both PTM and PTP paths being activated, or both PTM and PTP paths being configured; and
both PTM and PTP paths being deactivated, or both PTM and PTP paths being deconfigured.

The only PTM path being activated or configured can be that only the PTM path is activated or configured for the multicast service in the target path state, so that the terminal can receive the multicast service through the PTM path.

The only PTP path being activated or configured can be that only the PTP path is activated or configured for the multicast service in the target path state, so that the terminal receives the multicast service through the PTP path.

The both PTM and PTP paths being activated can be that both the PTM and PTP paths are activated for the multicast service in the target path state, so that the terminal can receive multicast service through the PTM and PTP paths.

The both PTM and PTP paths being configured can be that both the PTM and PTP paths are configured for the multicast service in the target path state, so that the terminal can receive the multicast service through the PTM and PTP paths.

The both PTM and PTP paths being deactivated may be that the PTM and PTP paths are deactivated for the multicast service in the target path state, so that the terminal does not receive the multicast service through the PTM or PTP path.

The both PTM and PTP paths being deconfigured may be that the PTM and PTP paths are deconfigured for the multicast service in the target path state, so that the terminal does not receive the multicast service through the PTM or PTP path.

In this embodiment, by using the various path states, the path state of the multicast service can be flexibly reconfigured, thus improving the reception experience of the multicast service for terminals.

Furthermore, when the PTM path is activated or configured, the terminal can monitor the group-radio network temporary identity (Group-Radio Network Temporary Identity, G-RNTI) corresponding to the multicast service, and in the case of the discontinuous reception mechanism (Discontinuous Reception, DRX) being configured, it performs the corresponding group DRX pattern (group DRX pattern) monitoring;
when the PTP path is activated or configured, the terminal can monitor the cell-radio network temporary identifier (Cell-Radio Network Temporary Identifier, C-RNTI), and in the case of DRX being configured, the terminal simultaneously performs group DRX pattern and unicast DRX pattern (unicast DRX pattern) monitoring; and
when both the PTP and PTM paths are activated, the terminal monitors both G-RNTI and C-RNTI, and simultaneously performs group DRX pattern and unicast DRX pattern monitoring.

Optionally, the method further includes:
in a case that a trigger condition is met, transmitting, by the terminal, a reception state report on the activated or configured PTP path.

The reception state report can indicate a current reception state of the terminal for the multicast service. Additionally, the above reception state report may be a reception state report of the packet data convergence protocol (Packet Data Convergence Protocol, PDCP) layer, and the PTP path and PTM path of the PDCP layer are public.

In this embodiment, the reception state report enables the network device to fully understand the situation of the terminal receiving the multicast service, further improving the reception performance of the terminal receiving the multicast service. For example, the state report displays the portion of missing received data, and the network side can use the PTP path to retransmit the missing data to the terminal, so that the receiving end of the terminal can continuously sort and sequentially submit the data to upper layers.

In some embodiments, the trigger condition includes:
the target path state includes the PTP path being activated or configured; or.
the target path state includes the PTP path being activated or configured, and the PTP path is configured to radio link control (Radio Link Control, RLC) acknowledgment mode (Acknowledged Mode, AM); or
the target path state includes the PTP path being activated or configured, and the terminal receives the second indication information, where the second indication information is used to instruct the terminal to report the reception state for receiving the multicast service; or
the target path state includes the PTP path being activated, and the first indication information is used to instruct the terminal to report a reception state of a path activated in the target path state.

That the target path state includes the PTP path being activated means that the PTP path is activated in the target path state.

With the trigger condition that the target path state includes the PTP path being activated, it is possible to achieve the reporting of the reception state report as long as the target path state includes the PTP path being activated.

The activated PTP path being configured to RLC AM can be that the reception state is reported by default if the PTP path included in the PTP path state reconfigured is configured to RLC AM.

The second indication information mentioned above can be pre-obtained indication information, for example, this indication information is semi-static configuration information and can be transmitted together with PTP path configuration information. If the second indication information is received, reporting is performed, and if the second indication information is not received/not configured, reporting is not performed.

Whether to report the reception state in the target path state is dynamically configured through the first indication information. If the first indication information indicates reporting, the terminal reports a reception state report; otherwise, it does not report. Furthermore, when the target path state includes multiple activated paths, the first indication information can indicate reporting of the reception state on all or part of the paths.

In an optional implementation, the method further includes:
the terminal determines an initial path state of the multicast service according to network configuration or protocol requirements.

The initial path state of the multicast service can be an initial path state implicitly or explicitly configured in the network, or an initial path state stipulated by the protocol.

For example, the initial path state can include one of the following:
only PTM path being activated or configured;
only PTP path being activated or configured;
both PTM and PTP paths being activated, or both PTM and PTP paths being configured; and
both PTM and PTP paths being deactivated, or both PTM and PTP paths being deconfigured.

Step 201 may be a reconfiguration performed based on the initial path state, such as reconfiguration from the initial path state to the target path state. Certainly, this is not limited. For example, step 201 may be a reconfiguration performed again after the path of the multicast service has already been reconfigured, which means that the path of the multicast service can be reconfigured multiple times in the embodiment of this application.

Optionally, the network configuration includes at least one of the following configurations:
terminal-dedicated signaling, common signaling, and group signaling.

For example, any one of the terminal-dedicated signaling, common signaling, and group signaling mentioned above can carry the configuration of both PTM and PTP paths. The configuration can specifically be configuring the state of the PTM path and PTP path, such as activating or deactivating the PTM path and PTP path. The terminal-dedicated signaling can be radio resource control (Radio Resource Control, RRC) signaling, for example, terminal-dedicated RRC signaling (UE dedicated RRC signaling). In addition, the network device uses RRC signaling to configure a transmit parameter of at least one of the PTM path and PTP path of the multicast service for the terminal and explicitly or implicitly indicates the initial path state.

Additionally, multiple pieces of the foregoing signaling can be combined to configure the initial path state.

Optionally, when the network configuration includes the common signaling or group signaling and also includes the terminal-dedicated signaling, the common signaling or group signaling is used for configuring first configuration information of the PTM path, and the terminal-dedicated signaling is used for configuring at least one of the following:
second configuration information of the PTM path, and configuration information of the PTP path.

The first configuration information of the PTM path can be a part of configuration information of the PTM path, such as most of the configuration information of the PTM path, and the second configuration information of the PTM path can be another part of the configuration information of the PTM path, such as a small part of the configuration information of the PTM path.

This embodiment can achieve configuring the first configuration information of the PTM path through the common signaling or group signaling and configuring the second configuration information of the PTM path and the configuration information of the PTP path through the terminal-dedicated signaling. This saves signaling overhead because the first configuration information of the PTM path can be configured to multiple terminals simultaneously through the common signaling or group signaling.

This embodiment can configure an initial path state separately for each wireless Radio Bearer (Radio Bearer, RB) of the multicast service. For example, the multicast service is a group multicast service, and an initial path state for each RB included in a temporary mobile group identity (Temporary Mobile Group Identity, TMGI) is indicated separately. If the TMGI includes three RBs, an initial path state of each of the three RBs is independently configured.

Alternatively, an initial path state can be configured based on the TMGI granularity. For example, if a TMGI contains three RBs, all the three RBs use the same initial path state in the configuration of an initial path state for the TMGI.

In an optional implementation, the method further includes:
determining a default path state for the multicast service when the terminal receives notification information, where the notification information is used to notify the terminal to receive the multicast service, and the default path state is a network configuration or a protocol specification.

The above notification message can be to notify the terminal to receive a new multicast service, or to notify the terminal to receive new data of the multicast service. For example, the path of the multicast service is deactivated, and after receiving the notification message, the terminal sets the path of the multicast service to the default path state mentioned above and receives the multicast service, that is, restart to receive the multicast service.

The default path state can be set according to network configuration or protocol specification, for example, both PTM and PTP paths being activated, or only PTM path being activated or only PTP path being activated. Different terminals or multicast services can be configured with identical or different default path states. For example, both PTM and PTP paths being configured, or only PTM path being configured or only PTP path being configured. Different terminals or multicast services can be configured with identical or different default path states.

In some scenarios, for the default path state configuration method, reference may be made to the above initial path state configuration method, and the above default path state can also be the above initial path state.

In the above embodiment, the default path state of the multicast service is determined when the notification information is received by the terminal. This can save signaling overhead because there is no need for the network to configure a path state to the terminal in this case.

In an optional embodiment, the first indication information includes at least one of the following:
multicast media access control control element (Media Access Control Control Element, MAC CE), multicast layer 1 (L 1) signaling, unicast MAC CE, unicast L1 signaling, and radio resource control RRC signaling.

The multicast MAC CE can be a MAC CE scheduled with a group-radio network temporary identity (Group-Radio Network Temporary Identity, G-RNTI), through which the first indication information can be transmitted to all terminals in the group. Furthermore, due to the one-to-one correspondence between G-RNTI and TMGI, the terminal can determine the multicast service, namely, the multicast service that requires path reconfiguration, through the multicast MAC CE. Specifically, the multicast MAC CE can carry information of the reconfigured path state, such as the information of the target path state. Certainly, this information may not be carried. For example, the target path state mentioned above can be pre-configured.

Optionally, the above RRC signaling can alternatively be RRC connection reconfiguration signaling.

The above multicast L1 signaling can alternatively be L1 signaling scheduled by G-RNTI, which can include information carrying the path state of the reconfiguration, for example, the information of the target path state mentioned above.

The unicast MAC CE and unicast L1 signaling can be signaling invoked with a cell-radio network temporary identifier (Cell-Radio Network Temporary Identifier, C-RNTI), and can carry information of the reconfigured path state and can also carry the multicast service, for example, indicating a TMGI corresponding to the multicast service.

The above signaling can be used to dynamically notify the terminal to reconfigure a path state of the multicast service.

In an optional embodiment, the first indication information is used to indicate at least one of the following:
identification information of the multicast service;
the target path state; and
configuration information of a target path corresponding to the target path state.

The identification information of the multicast service can be a TMGI corresponding to the multicast service, or a specific service identifier.

It should be noted that in the case where the first indication information mentioned above does not indicate the identification information of the multicast service, the multicast service may be related to the transmission method of the first indication information. For example, if a G-RNTI is used to schedule the first indication information, it can be inferred that the G-RNTI is used for the multicast service corresponding to the G-RNTI, or there is no confusion when only one service is of interest to the terminal.

Specifically, the identification information of the multicast service and the target path state can be indicated by at least one of the multicast MAC CE, multicast L1 signaling, unicast MAC CE, or unicast L1 signaling.

In an optional implementation, the method further includes:
the terminal transmits acknowledgment information for the first indication information.

The acknowledgment information for the first indication information transmitted above can be an acknowledgment message transmitted to the network device, and the acknowledgment message can be an RRC Reconfiguration Complete (RRC Reconfiguration Complete) message.

The acknowledgment information can be a hybrid automatic repeat request (Hybrid Automatic Repeat reQuest, HARQ) feedback, such as multicast HARQ feedback. Alternatively, the acknowledgment information can be used to inform the network whether the terminal has correctly received the first indication information. For example, the acknowledgment information is an uplink MAC CE, which carries the acknowledgment information for the first indication information transmitted to the network, letting the network side know that the terminal received the first indication information successfully.

In this embodiment, the acknowledgment information above can make the network device and the terminal understand the path reconfiguration behavior of the terminal in the same way, and can also improve the success probability of the terminal receiving the first indication information, because, after the network device receives that acknowledgment that the above-mentioned first indication information fails to be received, the above-mentioned first indication information may be transmitted again.

It should be noted that in the embodiment of this application, in addition to transmitting the above-mentioned acknowledgment information, other methods can be used to improve the success rate of the terminal receiving the first indication information. For example, the network device can retransmit the above-mentioned first indication information to increase the success rate of the terminal receiving the first indication information; or the network device can transmit, within a same cycle, the first indication information for reconfiguring a same path state, that is, the latest activated paths transmitted in the same cycle must be the same, which facilitates the success of the terminal in receiving the first indication information and avoids inconsistent activation status between the terminal and the network caused by too frequent changes in the activated path on the network side, resulting in packet loss. Alternatively, based on the feedback acknowledgment from the terminal, such as HARQ feedback, obtained or not obtained from the data transmitted on the new path, the network device can determine whether the terminal has successfully received the first indication information, and if finding that the terminal does not provide feedback, the network device can transmit the first indication information again.

In an optional embodiment, after the path reconfiguration for executing multicast service, the method further includes at least one of the following:
in a case that the target path state includes the PTP path being activated or configured, the terminal performs cell-radio network temporary identifier C-RNTI monitoring during a first time for the activated or configured PTP path;
in a case that the target path state includes the PTM path being activated or configured, the terminal performs group-radio network temporary identifier G-RNTI monitoring during a second time for the activated or configured PTM path;
in a case that the target path state includes the PTP path being deactivated or deconfigured, the terminal performs C-RNTI monitoring during a third time for the deactivated or deconfigured PTP path but does not perform C-RNTI monitoring during a fourth time, where the third time includes activation or configuration time in the unicast discontinuous reception DRX pattern, and the fourth time includes a time that does not overlap with the third time in activation or configuration time of the group non-discontinuous reception DRX pattern corresponding to the multicast service; and
in a case that the target path state includes the PTM path being deactivated or deconfigured, the terminal suspends monitoring the multicast service or suspends G-RNTI monitoring during a second time for the deactivated or deconfigured PTM path.

The first time may include: a union of activation or configuration time in the group DRX pattern corresponding to the multicast service and activation or configuration time in the unicast DRX pattern, or in a case that DRX is not configured, the first time is all downlink moments; and
the second time may include: activation or configuration time in the group DRX pattern corresponding to the multicast service, or in a case that DRX is not configured, the second time is all downlink moments.

In the case that the target path state includes the PTP path being activated or configured, the terminal may perform C-RNTI monitoring during the first time for the PTP path activated or configured with the multicast service, and the terminal needs to perform C-RNTI monitoring during activation or configuration time of the TMGI corresponding to the multicast service (for example, during the On duration of the group DRX). Due to the effect of the unicast DRX configuration, the terminal also performs C-RNTI monitoring during activation or configuration time (On duration) of unicast. In other words, the actual C-RNTI monitoring by the terminal is performed at a union of activation or configuration time in the group DRX pattern and activation or configuration time in the unicast DRX pattern.

It should be noted that the above-mentioned first time may include the union of activation or configuration time in the group DRX pattern corresponding to the multicast service and activation or configuration time in the unicast DRX pattern, so that the terminal can receive both multicast and unicast services.

G-RNTI monitoring performed by the terminal during a second time for the activated or configured PTM path in the case that the target path state includes the PTM path being activated or configured may be G-RNTI monitoring performed by the terminal at activation or configuration time (for example, On duration) for the TMGI corresponding to the multicast service.

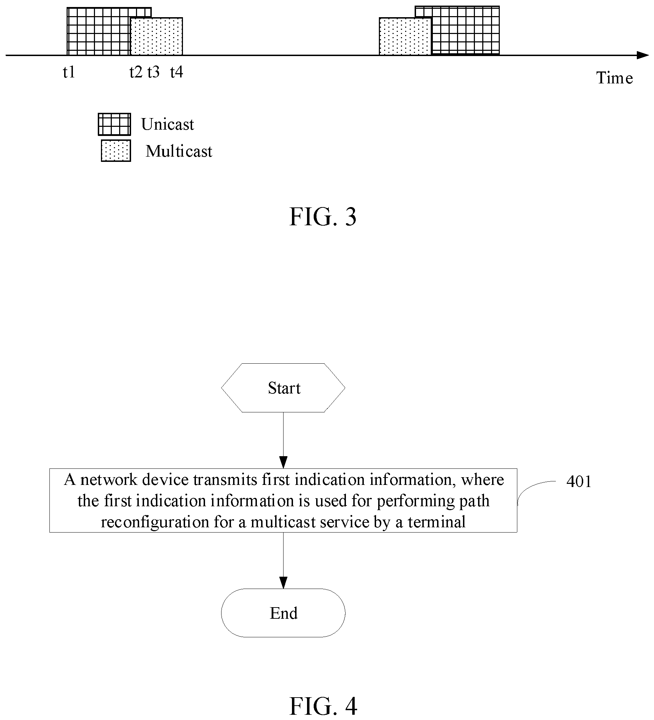

In the case that the target path state includes the PTP path being deactivated or deconfigured, the terminal performing C-RNTI monitoring during a third time for the deactivated or deconfigured PTP path without performing C-RNTI monitoring during a fourth time may be that the terminal performs C-RNTI monitoring during activation or configuration time in the unicast DRX pattern, but does not perform C-RNTI monitoring during activation or configuration time in the group DRX pattern corresponding to the multicast service that does not overlap with the third time. For example, as shown in FIG. 3, assuming that activation or configuration time of unicast includes an interval [t1-t3], and activation or configuration time of multicast service includes an interval [t2-t4], when PTP is activated or configured, the terminal needs to perform C-RNTI monitoring throughout the entire interval [t1-t4]. When PTP is deactivated or deconfigured, the terminal still needs to perform C-RNTI monitoring within [t1-t3], which includes [t2-t3], the overlap time of the two services. It should be noted that in the embodiment of this application, cycles of unicast and multicast services are configured separately, and various overlapping situations may occur. FIG. 3 is only an example of a configuration situation.

In the case that the target path state includes the PTM path being deactivated or deconfigured, that the terminal suspends monitoring the multicast service or suspends G-RNTI monitoring during a second time for the deactivated or deconfigured PTM path may be that the terminal does not need to perform corresponding G-RNTI monitoring in a case that the PTM path is deactivated or deconfigured until the PTM path corresponding to the multicast service is activated or reconfigured again.

In the embodiment of the application, C-RNTI monitoring may include: monitoring C-RNTI scheduling and receiving the scheduling data of this scheduling, where the C-RNTI is a proprietary C-RNTI of the terminal. G-RNTI monitoring may include: monitoring G-RNTI scheduling and receiving the scheduling data of this scheduling, where G-RNTI can be shared by a group of terminals.

Optionally, in a case that the activated or configured PTP path includes PTP paths of multiple groups of multicast services:
the first time includes a union of multiple activation or configuration times in the group DRX pattern of multiple groups and activation or configuration time in the unicast DRX pattern; or, in a case that DRX is not configured, the first time is all the downlink moments;
   or,
in a case that the PTM path activated or configured includes PTM paths of multiple groups of multicast services:
   the second time includes multiple activation or configuration times in the group DRX pattern of the multiple groups, and the terminal performs corresponding G-RNTI monitoring within each activation or configuration time, or in a case that DRX is not configured, the second time is all downlink moments.

In this embodiment, through the first time, it is possible to realize that the terminal needs to perform C-RNTI monitoring during both activation or configuration time in the group DRX pattern corresponding to each TMGI and activation or configuration time in the unicast DRX pattern in the case that PTP paths of multiple TMGIs are activated at the terminal, so that the terminal receives both multicast services from multiple groups and unicast services.

In this embodiment, through the second time, it is possible to realize that the terminal performs corresponding G-RNTI monitoring during activation or configuration time in the group DRX pattern corresponding to each TMGI in the case that PTM paths corresponding to multiple TMGIs are activated at the terminal, thereby enabling the terminal to receive multicast services from multiple groups.

In an optional embodiment, before the terminal obtains the first indication information, the method further includes:
transmitting tendency information by the terminal, where the tendency information is used to indicate power-saving tendency information of the terminal for the multicast service.

The tendency information can be transmitted separately as signaling or transmitted together with other information such as a terminal MBS interest indication (UE MBS Interest Indication).

The above power-saving tendency information can represent whether the terminal is inclined towards saving power or not saving power for the multicast services. For example, the power-saving tendency information can represent whether the terminal is inclined towards power-saving or inclined towards a superior QoS experience for the multicast services. In this way, the network device can determine an activated path corresponding to the terminal based on the tendency information transmitted by the terminal. For instance, terminals that have higher requirements for power-saving can be configured to activate only the PTM path or only the PTP path through the first indication information, while terminals that have higher requirements for service QoS can be configured to activate both the PTM path and the PTP path through the first indication information.

In the embodiments of this application, a terminal obtains first indication information, and the terminal performs path reconfiguration for a multicast service according to the first indication information. This enables the terminal to reconfigure a path for the multicast service, thereby improving the multicast service capability of the terminal.

Referring to FIG. 4. FIG. 4 is a flowchart of a path processing method provided in an embodiment of the present invention. As shown in FIG. 4, the method includes the following steps:

Step 401: A network device transmits first indication information, where the first indication information is used for performing path reconfiguration for a multicast service by a terminal.

Optionally, the terminal performing path reconfiguration for a multicast service includes:
reconfiguring a path state of the multicast service to a target path state.

Optionally, the target path state includes one of the following:
only point-to-multipoint PTM path being activated or configured;
only point-to-point PTP path being activated or configured;
both PTM and PTP paths being activated, or both PTM and PTP paths being configured; and
both PTM and PTP paths being deactivated, or both PTM and PTP paths being deconfigured.

Optionally, the method further includes:
in a case that a trigger condition is met, receiving, by the network device on an activated or configured PTP path, a reception state report transmitted by the terminal.

Optionally, the trigger condition includes:
the target path state includes the PTP path being activated or configured; or
the target path state includes the PTP path being activated or configured, and the PTP path is configured to radio link control RLC acknowledgment mode AM; or
the target path state includes the PTP path being activated or configured, and the terminal receives second indication information, where the second indication information is used to instruct the terminal to report a reception state for receiving the multicast service; or
the target path state includes the PTP path being activated, and the first indication information is used to instruct the terminal to report a reception state of a path activated in the target path state.

Optionally, the method further includes:
configuring, by the network device, an initial path state of the multicast service for the terminal.

Optionally, the initial path state includes one of the following:
only PTM path being activated or configured;
only PTP path being activated or configured;
both PTM and PTP paths being activated, or both PTM and PTP paths being configured; and
both PTM and PTP paths being deactivated, or both PTM and PTP paths being deconfigured.

Optionally, the configuring, by the network device, an initial path state of the multicast service for the terminal includes:
configuring, by the network device, an initial path state of the multicast service for the terminal through at least one of the following:
terminal-dedicated signaling, common signaling, and group signaling.

Optionally, when the network configuration includes the common signaling or group signaling and also includes the terminal-dedicated signaling, the common signaling or group signaling is used for configuring first configuration information of the PTM path, and the terminal-dedicated signaling is used for configuring at least one of the following:
second configuration information of the PTM path, and configuration information of the PTP path.

Optionally, the method further includes:
transmitting, by the network device, notification information to the terminal, where the notification information is used to inform the terminal to receive the multicast service.

Optionally, the first indication information includes at least one of the following:
multicast media access control control element MAC CE, multicast layer 1 L1 signaling, unicast MAC CE, unicast L1 signaling, and radio resource control RRC signaling.

Optionally, the first indication information is used to indicate at least one of the following:
identification information of the multicast service;
the target path state; and
configuration information of a target path corresponding to the target path state.

Optionally, the network device retransmits the first indication information, or
the network device transmits, within a same cycle, the first indication information for reconfiguring a same path state; or
the method further includes:
   receiving, by the network device, acknowledgement information of the first indication information.

Optionally, before the transmitting the first indication information by the network device, the method further includes: receiving, by the network device, tendency information transmitted by the terminal, where the tendency information is used to indicate power-saving tendency information of the terminal for the multicast service.

It should be noted that this embodiment is a network device side implementation corresponding to the embodiment shown in FIG. 2. For a specific implementation of this embodiment, refer to related descriptions of the embodiment shown in FIG. 2. To avoid repetition, details are not described in this embodiment again. This embodiment can also improve the multicast service capability of the terminal.

The path processing method provided by the embodiments of this application is described below by using examples with reference to a plurality of embodiments:

### Embodiment 1

This embodiment mainly describes the initial path state and mainly targets a terminal in an RRC connected state (RRC Connected state), that is, a terminal that has established an RRC connection with the network side. A terminal in an idle state (Idle state) or inactive state (inactive state) can enter the connected state upon data arrival to receive the first indication information. Certainly, the embodiment of this application does not limit the terminal to receive the first indication information in the connected state. For example, in some special scenarios, the terminal can also receive the first indication information in the idle state or inactive state. In addition, for terminals in the inactive state, PTP and PTM paths configured during the connected state can be retained for the state where the multicast service is suspended or there is no data temporarily. The following uses the terminal in the connected state as an example for illustration.

For the terminal in the connected state, the steps for establishing PTM and PTP paths corresponding to the multicast service and obtaining the initial path state mainly include the following steps.

Step 0: The terminal obtains basic information of the MBS service from a system message or common signaling (mostly for terminals with the Idle/Inactive initial state, and certainly also for Connected terminals) or dedicated signaling (only for Connected terminals), where the basic information may include TMGI, scheduling demand information, or type information (primarily indicating to the terminal that this is a multicast service, or informing the terminal that this service needs to enter a connected state for reception).

Step 1: The terminal is interested in the multicast service corresponding to this TMGI, and if the terminal is not a Connected terminal, it initiates RRC connection establishment or RRC connection resumption to enter the Connected state and activates or resumes the security mechanism to transmit interested information about this TMGI service to the network side.

Step 2: If the network device learns that the terminal is interested in this TMGI, it configures PTP and PTM paths corresponding to the TMGI service for the terminal. Generally, one TMGI service can include one or more RBs, and there are two ways to transmit the configuration.

Method 1: PTP path and PTM path configurations are simultaneously transmitted through terminal-dedicated RRC signaling. This method is relatively simple as the network transmits dedicated signaling to all terminals receiving the multicast service to configure each terminal.

Method 2: Most of the PTM path configuration is transmitted through common or group signaling (Common/group signaling), and PTP path configuration and parameters related to a single terminal in the PTM path are transmitted through terminal-dedicated RRC signaling. This method saves signaling overhead to the greatest extent by using multicast to transmit common configurations for multiple terminals, which can be received simultaneously by multiple terminals with one transmission, while transmitting PTP configurations separately. In the PTM path, for example, a dedicated feedback position of the HARQ feedback for each terminal is also transmitted to the terminal separately. For the multicast transmission of PTM, it is necessary to take a given period for multiple transmissions to ensure that all terminals can receive the multicast signaling. A specific method is notified to the terminal by the network.

In the process of transmitting PTM and PTP configurations, the network needs to explicitly or implicitly notify the terminal of a currently initial path activated for each RB of this TMGI as follows.

The activation status for PTM path and PTP path can be any one of the following:
only PTM path being activated or configured (Only PTM activated);
only PTP path being activated or configured (Only PTP activated);
both PTM and PTP paths being activated (Both PTM and PTP activated), or both PTM and PTP paths being configured; or
both PTM and PTP paths being deactivated (Both PTM and PTP deactivated), or both PTM and PTP paths being deconfigured.

The explicit mode means that the network side explicitly carries a current initial activated path state in the configuration signaling, which can be any one of the four mentioned above. For example, the initial state can be indicated based on each RB included in TMGI, that is, the TMGI contains three RBs, and each of the three RBs has its own initial state, which is configured independently; or, the initial state is given based on TMGI granularity, that is, TMGI contains three RBs, but an initial state at TMGI granularity is given, and all the three RBs use this initial state.

The implicit mode means that according to the agreement, an initial state is defined for each RB of TMGI, which can be either a public state or an independent state.

Another implicit mode is to carry an initial state indication in the configuration signaling, but if this field does not appear, the implicit mode means one of the states.

In particular, the initial path state configuration can be combined with the PTM configuration to be multicast to multiple terminals, meaning that all terminals have an initial path state. Another more flexible mode is to configure an independent initial path state for each terminal in the dedicated RRC signaling of the terminal, and each terminal may have a different initial path state.

While transmitting the PTM and PTP configurations, the network can also inform the terminal of the periodic information and/or DRX information about this TMGI service, such as at least one of the following:
data cycle (DRX long cycle), start offset (DRX cycle offset), duration of each cycle (on duration timer), inactivity timer (Inactivity timer), and HARQ scheduling related timer (such as HARQ RTT timer and HARQ retransmission timer).

Step 3: The terminal receives PTM and PTP configurations, establishes layer 2 (L2) protocol entities corresponding to PTM and PTP according to the configurations, and initiates monitoring and receiving of the activated PTM and/or PTP paths during the data cycle based on the configured or prescribed initial path state, as well as possible periodic information or DRX information.

### Embodiment 2

This embodiment mainly describes the reconfiguration of the activated path. Specifically, after the terminal obtains PTM and PTP configurations and an initial path state, it performs monitoring and reception operations according to the currently activated path. If discovering a change subsequently, the network side can dynamically notify the terminal to reconfigure the activation state. The notification method includes one or a combination of the following options:
multicast MAC CE: this method means that the network side transmits path information to all terminals within a group at once using the G-RNTI scheduling method. Since G-RNTIs correspond to TMGIs one-to-one, the terminal can know from the G-RNTI which service's activated path state is changed, so the information on the changed state is only carried in the MAC CE;
multicast L1 signaling: this method is similar to the above multicast MAC CE but uses L1 signaling to carry the changed path information;
unicast MAC CE: this method is to transmit the path information to a specific terminal separately to change an activated path of a single terminal and perform scheduling with C-RNTI. Information about the changed path is carried, and optionally a TMGI with a path change is indicated; and
unicast L1 signaling: this method is similar to the above unicast MAC CE but uses L1 signaling to carry the information about the changed path, and optionally TMGI information is indicated.

In the following, the MAC CE is used as an example to introduce the specific signaling format. If it is L1 signaling, the information method is similar.

The MAC CE can be composed of a MAC subheader and information content (MAC subheader + content). The MAC subheader mainly contains logical channel identification (Logical Channel Identification, LCID) and possible length information. The LCID is used to distinguish what type of MAC CE it is or whether it is data radio bearer (Data Radio Bearer, DRB) data. The length information is used to indicate a total length of the MAC CE, and when the length of the MAC CE is fixed, the length information can be omitted.

A typical MAC CE used for indicating path reconfiguration may include the following: LCID (in subheader) + state, where the state information can consist of 2 bits, 00 representing PTM only, 01 representing PTP only, 10 representing both activated, and 11 representing both deactivated. Upon receiving the MAC CE, the terminal reads out the LCID to obtain that this is a MAC CE type for multicast path changing and obtains a current switching state according to the state field, and then, according to the state indicated by the network, proceeds to perform monitoring and reception. As no TMGI information is carried, this manner can be used for multicast transmission. The G-RNTI itself already implies the TMGI information, and the terminal can accurately know that the state of the TMGI is changed. Alternatively, for unicast mode transmission, since the terminal may receive multiple TMGI services at the same time and there is no specified TMGI in the control information, it means that all TMGIs are received according to the activated state latest indicated.

Another typical MAC CE used for indicating path reconfiguration may include the following content: LCID (in subheader) + TMGI information + state. The state information is the same as above, and the TMGI information is used to indicate which TMGI the path switching is for. This method is generally used for unicast MAC CE and is used when multiple services are received by one terminal simultaneously. The TMGI information is as follows:
a TMGI itself being directly carried; or
an index being used to reduce overheads because the actual TMGI is relatively long, where all TMGI information provided to the terminal carry index identifiers. For example, TMGI1 and TMGI2 are configured for the first time with index 1 and index 2 respectively, and TMGI 3 is configured for the second time with index 3, and so on. Since a terminal can receive a limited number of TMGI services at the same time, such as 8 or 16, the index length only needs to be 3 bits or 4 bits.

In particular, to ensure that the terminal can receive the first indication information correctly and avoid any discrepancy between the network side and the terminal that may cause a mismatch and result in the terminal missing out on receiving the interested service, the following methods or combinations can be used to further ensure receiving effectiveness.

For the feedback mechanism defined in the MAC CE or L1 signaling initiation protocol, generally speaking, there is corresponding HARQ feedback for the transmitting of MAC CE, where unicast HARQ feedback is mandatory, and multicast HARQ feedback is according to network configuration. For example, the network can configure a multicast HARQ feedback index for each connected terminal, and the terminal performs multicast HARQ feedback at a position corresponding to the index. If the network device receives the HARQ ACK feedback from the terminal, it considers that the terminal has successfully received the first indication information. For the L1 signaling, an uplink feedback mechanism can also be adopted to confirm successful reception. To ensure that each terminal correctly receives the first indication information, feedback is based on unicast or each terminal has its own dedicated feedback position based on multicast.

Alternatively, a new acknowledgment mechanism can be used for MAC CE or L1 signaling. This involves designing a new uplink acknowledgment mechanism so that the terminal can clearly inform the network device that it has correctly received the first indication information. One feasible approach is to use uplink MAC CE to carry acknowledgment information for the downlink first indication information transmitted to the network side or to confirm once the terminal has received new activated path information, so that the network device knows clearly that the terminal has successfully received it.

Alternatively, the network device can repeatedly transmit and/or modify the cycle. In this manner, the network device repeatedly transmits the same first indication information several times to increase the probability of successful reception by the terminal. In addition, an additional modification cycle can be set. Within the range of an activated path modification cycle, only one state transition is allowed to be transmitted, and the latest activated path transmitted within the same cycle must be the same. This makes it easy for the terminal to successfully receive the conversion signaling and avoids the inconsistency between the terminal and the network activation status caused by too frequent changes to the activated path on the network side, thereby avoiding packet loss. The modification cycle method can also be used in the acknowledgment mechanism. In a modification cycle, unified new activation information is transmitted, and the terminal confirms the information within the same cycle, thus reducing information content carried for acknowledgment by the terminal because information transmitting and acknowledgment occur within the same cycle.

Alternatively, the network device obtains or does not obtain feedback acknowledgment from the terminal, such as HARQ feedback, based on data transmitted on the new path (for example, the target path state), to determine whether the terminal has successfully received the first indication information. If finding that the terminal does not provide feedback, the network device can transmit the first indication information again.

It should be noted that in the embodiment of this application, the first indication information can also be referred to as path conversion information, path forwarding signaling, or path activation signaling.

Generally speaking, the network device can use unicast C-RNTI scheduling or multicast G-RNTI scheduling to transmit any indication information, for example, using C-RNTI scheduling or multicast G-RNTI scheduling to transmit the first indication information. For example, the new activated path can be any one of the above four types, but the first indication information transmitted with C-RNTI can be transmitted at any time when the terminal needs to monitor the C-RNTI, even if PTP is not activated, but the first indication information transmitted with G-RNTI is transmitted when the terminal's PTM path is activated.

Specifically, the network device can configure the first indication information with both PTP and PTM deactivated to implicitly inform the terminal that the service is suspended or there is no data transmission temporarily. Upon next data arrival, the network device uses a conversion signaling transmitted through unicast C-RNTI to activate the terminal's PTM and/or PTP to re-enter the service data transmission state.

### Embodiment 3

This embodiment mainly describes terminal monitoring and receiving behavior. Specifically, for terminal monitoring and receiving behavior, the following basic principles apply (if DRX is not configured, it means all downlink moments are activation or configuration time):
if a PTP path corresponding to one TMGI is activated at the terminal, the terminal needs to perform C-RNTI monitoring during activation or configuration time (On duration) of this TMGI;
the C-RNTI monitoring of the terminal is also affected by unicast DRX configuration, and the terminal also needs to perform C-RNTI monitoring during activation or configuration time (On duration) of unicast;
the actual C-RNTI monitoring of the terminal is a union of the above two, and when the terminal activates PTP paths of multiple TMGIs, the terminal needs to perform C-RNTI monitoring during activation or configuration time corresponding to each TMGI and activation or configuration time of unicast;
when a PTM path corresponding to a TMGI is activated at the terminal, the terminal needs to perform corresponding G-RNTI monitoring during activation or configuration time of this TMGI;
when PTM paths corresponding to multiple TMGIs are activated at the terminal, the terminal needs to perform corresponding G-RNTI monitoring during activation or configuration time of each TMGI; and
when a PTM path corresponding to a TMGI is deactivated at the terminal, the terminal does not need to perform corresponding G-RNTI monitoring until the PTM path of this TMGI is activated again.

When the terminal is instructed to activate only PTM, the terminal may behave as follows.

Generally speaking, the multicast service TMGI granularity is configured with a given service cycle or DRX information, indicating that the network side schedules the service during activation or configuration time indicated by the cycle; if no service cycle or DRX cycle is configured, meaning that the network side may schedule the service at any time. For the terminal, if only PTM activated is indicated for one TMGI service, the terminal needs to monitor scheduling information about the G-RNTI corresponding to the TMGI during activation or configuration time indicated by the cycle, to receive a multicast service on a scheduling resource. If there is no cycle configuration, the terminal monitors scheduling information about the G-RNTI corresponding to the TMGI at all downlink moments, to receive the multicast service on the scheduling resource.

At this time, for C-RNTI monitoring, since the terminal still has other normal unicast services, if DRX is configured for unicast, the terminal behavior is to monitor C-RNTI scheduling during activation or configuration time of unicast DRX, so as to receive unicast services; if unicast is not configured with DRX, it means that the terminal behavior is to monitor C-RNTI scheduling at all downlink moments, and then receive unicast services.

Specifically, the terminal does not need to monitor C-RNTI scheduling during activation or configuration time of TMGI but not during activation or configuration time of unicast DRX.

In particular, when a terminal has two or more interested multicast service TMGIs, if one TMGI indicates that only PTM is activated, the terminal does not need to monitor C-RNTI scheduling during activation or configuration time of the service but not during the unicast DRX activation or configuration time. If another TMGI indicates another state, rules of the another state are followed. In general, the terminal needs to perform C-RNTI monitoring during corresponding activation or configuration time of the activated PTP path in multiple TMGIs or during activation or configuration time of unicast.

When the terminal is instructed to activate only PTP, the behavior of the terminal is as follows:
if the terminal is instructed for only PTP activated for a TMGI, it means that the terminal does not need to monitor the corresponding G-RNTI at any time thereafter until the terminal is reactivated on the PTM path.

At this time, for C-RNTI monitoring, the terminal needs to perform C-RNTI monitoring during activation or configuration time of all TMGIs with activated PTP paths or during activation or configuration time of unicast services, to obtain the scheduling and reception of multicast or unicast services.

When the terminal is instructed to activate both PTP and PTM, the terminal can behave as follows:
if PTM activated is indicated for a TMGI service, the terminal needs to monitor scheduling information about a G-RNTI corresponding to this TMGI at activation or configuration time indicated in the cycle when there is a cycle configuration, so as to receive multicast services on scheduling resources. If there is no cycle configured, the terminal monitors scheduling information about the G-RNTI corresponding to this TMGI at all downlink moments, so as to receive multicast services on scheduling resources.

At this time, for C-RNTI monitoring, the terminal needs to perform C-RNTI monitoring during activation or configuration time of all TMGIs with activated PTP paths or during activation or configuration time of unicast services, to obtain the scheduling and reception of multicast or unicast services.

When the terminal is instructed to deactivate both PTP and PTM, the terminal can behave as follows:
if only PTP activated is indicated to the terminal for a TMGI, it means that the terminal does not need to monitor G-RNTI at any time thereafter until the PTM path is reactivated at the terminal.

At this time, for C-RNTI monitoring, the terminal does not need to perform C-RNTI monitoring during activation or configuration time of a TMGI corresponding to the deactivated PTP path and only needs to perform C-RNTI monitoring during activation or configuration time of all other TMGIs with activated PTP paths or during activation or configuration time of unicast services, to obtain the scheduling and reception of multicast or unicast services.

When the PTM path is deactivated at the terminal, the measurement reporting related to the PTM path can be as follows:
if the PTM is deactivated, the measurement reporting related to the PTM path is stopped by default; and
based on the configuration switch, it is determined whether to stop or continue the measurement reporting related to the PTM path.

### Embodiment 4

This embodiment mainly describes reconfiguration of activated paths, and details are as follows.

The network device can adopt a separate control method for terminals in the connected state. For example, for terminals with good link conditions located in the middle of a cell, only PTM activated can be used, fully utilizing multicast transmission to achieve better resource efficiency. For terminals located at the edge of a cell or with poor channel conditions, both PTM and PTP activated can be configured, making it easier for the network side to flexibly switch between two paths, and even perform duplication transmissions (duplication transmission) on the two paths to further improve the QoS experience of edge terminals.

Specifically, the terminal can also report its power-saving tendency information, which can be the tendency information on power saving and QoS quality. For example, the terminal is more inclined towards power saving or towards high QoS experience. The network side can determine how to activate the path for the terminal based on the tendency reported by the terminal. For terminals with higher requirements for power saving, only PTM activated or only PTP activated may be indicated, while for terminals with higher requirements for service QoS, both PTM and PTP activated may be indicated. This tendency information reporting can be separate reporting signaling, and is reported when PTP and PTM configurations need to be performed for interested multicast services, and changes are reported immediately. The tendency information can also be reported with an interested MBS indication of the terminal. When the terminal reports its interested services, it will also report its preferences for power saving and QoS.

For the reception by the terminal, whether the PTM path is activated directly determines whether the terminal performs G-RNTI monitoring during the TMGI corresponding service cycle or DRX cycle. Whether the PTP path is activated affects C-RNTI monitoring during activation or configuration time only in the TMGI corresponding service cycle or DRX cycle rather than the unicast DRX cycle or other services, which means that even in the PTP deactivated state, the terminal still monitors the C-RNTI at activation or configuration time in the unicast DRX cycle or of other services, and if a TMGI service is received, the terminal processes it normally without deleting it.

Data packets received from two paths by the terminal are transmitted to a unified PDCP entity for operations such as reordering and duplicate detection to ensure that the data packets are delivered to higher layers in sequence.

Specifically, when both PTP and PTM deactivated is indicated to the terminal, the terminal suspends G-RNTI and C-RNTI monitoring for TMGI-related services or in DRX pattern until the path is reactivated through C-RNTI scheduling. In addition, there is another method of reactivating TMGI services using a notification mechanism, which involves transmitting a notification message to the terminal. This notification message is generally used to inform the terminal of new MBS service arrivals and is transmitted at regular intervals. Different services may have different notification periods depending on their delay requirements. The terminal monitors the positions of all notifications or only those of interest. If information is obtained indicating that the TMGI service has restarted, the terminal needs to start to enter the service reception state again. At this point, the terminal can enter the default path activation state, which can be obtained in the following ways:
according to standard regulations, such as both PTP and PTM activated, only PTM activated, or any one of the four states provided in the above embodiments;
through RRC signaling configuration: when PTM and PTP path parameters are configured in the RRC signaling, in addition to an initial path activation state, a default path activation state can also be provided, which can be any one of the four states provided in the above embodiment;
the default path activation state being the initial path state;
each terminal having a different configuration configured using dedicated RRC signaling; and
all terminals having a same configuration configured using common signaling or dedicated RRC signaling.

### Embodiment 5

This embodiment mainly describes a transmission configuration indicator (Transmission Configuration Indication, TCI) during path reconfiguration, and details are as follows.

In multicast transmission, G-RNTI scheduling is simultaneously transmitted to a group of terminals that may be located in various corners of a network, and therefore transmission parameters (such as antenna state) are significantly different from those in unicast transmission. Multicast antennas may require omnidirectional or sectoral antennas or beam sweeping for coverage of a number of receiving terminals. For unicast transmission, transmission parameters are transmitted only to a specified terminal and the network side already knows the orientation of the terminal through a previous antenna adjustment process, and therefore specific beam transmission or beamforming can be performed according to the orientation of the terminal.

In some scenarios, each terminal has a separate PDCCH TCI and PDSCH TCI, and PDCCH and PDSCH transmission parameters can be controlled by the network side, including antenna configuration and the like.

When the PTM path is activated at the terminal, the terminal needs to adapt to the multicast transmission mode. The multicast transmission configuration information can be in default mode (such as standard regulations) or can use a common signaling notification, or can use a dedicated RRC signaling notification. If an antenna in the multicast transmission configuration changes during the communication process, a multicast MAC CE or unicast MAC CE can be used for notification. In addition, if the terminal is interested in multiple TMGI services, transmission parameter adjustments can be transmitted independently for each of the multiple TMGI services.

When the PTP path is activated at the terminal, the terminal needs to use the PTP method to manage transmission configurations, including antenna-related states. The transmission configuration management using the PTP method can be a protocol-defined mechanism and can be reused, with a change that when the PTP path is activated for the TMGI service, activation or configuration time for unicast monitoring may increase accordingly.

If both the PTM and PTP paths are activated at the terminal, the terminal adjusts the transmission configuration separately in multicast and unicast. The terminal receives signaling indications from the network side and then executes adjustments according to the signaling indications. PTP transmission adjustments can be transmitted using only unicast, and instructions for PTM transmission adjustment can be transmitted using either multicast or unicast.

When both PTM and PTP paths are deactivated at the terminal, the terminal no longer receives TCI information related to PTM but still performs PTP transmission normally to transmit or receive other unicast services.

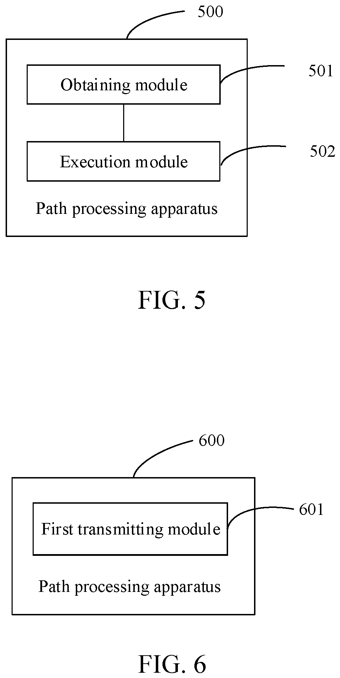

Referring to FIG. 5. FIG. 5 shows a structural diagram of a path processing apparatus provided in an embodiment of the present invention. As shown in FIG. 5, the path processing apparatus 500 includes:
an obtaining module 501 configured to obtain first indication information; and
an execution module 502 configured to perform path reconfiguration for a multicast service according to the first indication information.

Optionally, the performing path reconfiguration for a multicast service includes:
reconfiguring a path state of the multicast service to a target path state.

Optionally, the target path state includes one of the following:
only point-to-multipoint PTM path being activated or configured;
only point-to-point PTP path being activated or configured;
both PTM and PTP paths being activated, or both PTM and PTP paths being configured; and
both PTM and PTP paths being deactivated, or both PTM and PTP paths being deconfigured.

Optionally, the apparatus further includes:
a first transmitting module configured to transmit a reception state report on an activated or configured PTP path in a case that a trigger condition is met.

Optionally, the trigger condition includes:
the target path state includes the PTP path being activated or configured; or
the target path state includes the PTP path being activated or configured, and the PTP path is configured to radio link control RLC acknowledgment mode AM; or
the target path state includes the PTP path being activated or configured, and the terminal receives second indication information, where the second indication information is used to instruct the terminal to report a reception state for receiving the multicast service; or
the target path state includes the PTP path being activated, and the first indication information is used to instruct the terminal to report a reception state of a path activated in the target path state.

Optionally, the apparatus further includes:
a first determining module configured to determine an initial path state of the multicast service according to network configuration or protocol specifications.

Optionally, the initial path state includes one of the following:
only PTM path being activated or configured;
only PTP path being activated or configured;
both PTM and PTP paths being activated, or both PTM and PTP paths being configured; and
both PTM and PTP paths being deactivated, or both PTM and PTP paths being deconfigured.

Optionally, the network configuration includes at least one of the following configurations:
terminal-dedicated signaling, common signaling, and group signaling.

Optionally, when the network configuration includes the common signaling or group signaling and also includes the terminal-dedicated signaling, the common signaling or group signaling is used for configuring first configuration information of the PTM path, and the terminal-dedicated signaling is used for configuring at least one of the following:
second configuration information of the PTM path, and configuration information of the PTP path.

Optionally, the apparatus further includes:
a second determining module, configured to determine a default path state of the multicast service when the terminal receives notification information, where the notification information is used to notify the terminal to receive the multicast service, and the default path state is determined according to network configuration or protocol specifications.

Optionally, the first indication information includes at least one of the following:
multicast media access control control element MAC CE, multicast layer 1 L1 signaling, unicast MAC CE, unicast L1 signaling, and radio resource control RRC signaling.

Optionally, the first indication information is used to indicate at least one of the following:
identification information of the multicast service;
the target path state; and
configuration information of a target path corresponding to the target path state.

Optionally, the apparatus further includes:
a second transmitting module configured to transmit acknowledgment information for the first indication information.

Optionally, after the performing path reconfiguration for a multicast service, the apparatus further includes at least one of the following:
a first monitoring module configured to perform cell-radio network temporary identifier C-RNTI monitoring during a first time for the activated or configured PTP path in a case that the target path state includes the PTP path being activated or configured;
a second monitoring module configured to perform group-radio network temporary identifier G-RNTI monitoring during a second time for the activated or configured PTM path in a case that the target path state includes the PTM path being activated or configured;
a third monitoring module configured to perform C-RNTI monitoring during a third time for the deactivated or deconfigured PTP path but does not perform C-RNTI monitoring during a fourth time in a case that the target path state includes the PTP path being deactivated or deconfigured, where the third time includes activation or configuration time in the unicast discontinuous reception DRX pattern, and the fourth time includes a time that does not overlap with the third time in activation or configuration time of the group non-discontinuous reception DRX pattern corresponding to the multicast service; and
a suspending module configured to suspend monitoring the multicast service or suspend G-RNTI monitoring during a second time for the deactivated or deconfigured PTM path in a case that the target path state includes the PTM path being deactivated or deconfigured.

Optionally, the first time includes a union of activation or configuration time in the group DRX pattern corresponding to the multicast service and activation or configuration time in the unicast DRX pattern, or in a case that DRX is not configured, the first time is all downlink moments; and
the second time includes activation or configuration time in the group DRX pattern corresponding to the multicast service, or in a case that DRX is not configured, the second time is all downlink moments.

Optionally, in a case that the PTP path activated or configured includes PTP paths of multiple groups of multicast services:
the first time includes a union of multiple activation or configuration times in the group DRX pattern of the multiple groups and activation or configuration time in the unicast DRX pattern, or in a case that DRX is not configured, the first time is all downlink moments;
   or,
in a case that the PTM path activated or configured includes PTM paths of multiple groups of multicast services:
   the second time includes multiple activation or configuration times in the group DRX pattern of the multiple groups, and the terminal performs corresponding G-RNTI monitoring within each activation or configuration time, or in a case that DRX is not configured, the second time is all downlink moments.

Optionally, the apparatus further includes:
a third transmitting module configured to transmit tendency information, where the tendency information is used to indicate power-saving tendency information of the terminal for the multicast service.

The path processing apparatus provided in the embodiment of this application can achieve each process in the method embodiment of FIG. 2. To avoid repetition, details are not described herein again. The communication performance of the communications device can be improved.

It should be noted that the path processing apparatus in this embodiment of this application may be an apparatus or may be a component, an integrated circuit, or a chip in a terminal.

Referring to FIG. 6, FIG. 6 is a structural diagram of another path processing apparatus provided in an embodiment of the present invention. As shown in FIG. 6, the path processing apparatus 600 includes:
a first transmitting module 601 configured to transmit first indication information, where the first indication information is used for performing path reconfiguration for a multicast service by a terminal.

Optionally, the terminal performing path reconfiguration for a multicast service includes:
reconfiguring a path state of the multicast service to a target path state.

Optionally, the target path state includes one of the following:
only point-to-multipoint PTM path being activated or configured;
only point-to-point PTP path being activated or configured;
both PTM and PTP paths being activated, or both PTM and PTP paths being configured; and
both PTM and PTP paths being deactivated, or both PTM and PTP paths being deconfigured.

Optionally, the apparatus further includes:
a first receiving module configured to: receive, on an activated or configured PTP path in a case that a trigger condition is met, a reception state report transmitted by the terminal.

Optionally, the trigger condition includes:
the target path state includes the PTP path being activated or configured; or
the target path state includes the PTP path being activated or configured, and the PTP path is configured to radio link control RLC acknowledgment mode AM; or
the target path state includes the PTP path being activated or configured, and the terminal receives second indication information, where the second indication information is used to instruct the terminal to report a reception state for receiving the multicast service; or
the target path state includes the PTP path being activated, and the first indication information is used to instruct the terminal to report a reception state of a path activated in the target path state.

Optionally, the apparatus further includes:
a configuration module configured to configure an initial path state of the multicast service for the terminal.

Optionally, the initial path state includes one of the following:
only PTM path being activated or configured;
only PTP path being activated or configured;
both PTM and PTP paths being activated, or both PTM and PTP paths being configured; and
both PTM and PTP paths being deactivated, or both PTM and PTP paths deconfigured.

Optionally, the configuration module is used to configure an initial path state of the multicast service for the terminal through at least one of the following:
terminal-dedicated signaling, common signaling, and group signaling.

Optionally, when the network configuration includes the common signaling or group signaling and also includes the terminal-dedicated signaling, the common signaling or group signaling is used for configuring first configuration information of the PTM path, and the terminal-dedicated signaling is used for configuring at least one of the following:
second configuration information of the PTM path, and configuration information of the PTP path.

Optionally, the apparatus further includes:
a second transmitting module configured to transmit notification information to the terminal, where the notification information is used to inform the terminal to receive the multicast service.

Optionally, the first indication information includes at least one of the following:
multicast media access control control element MAC CE, multicast layer 1 L1 signaling, unicast MAC CE, unicast L1 signaling, and radio resource control RRC signaling.

Optionally, the first indication information is used to indicate at least one of the following:
identification information of the multicast service;
the target path state; and
configuration information of a target path corresponding to the target path state.

Optionally, the network device retransmits the first indication information, or
the network device transmits, within a same cycle, the first indication information for reconfiguring a same path state; or
the apparatus further includes:
   a second receiving module for receiving acknowledgment information transmitted by the terminal in response to the first indication information transmitted.

Optionally, the apparatus further includes:
a third receiving module configured to receive tendency information transmitted by the terminal, where the tendency information is used to indicate power-saving tendency information of the terminal for the multicast service.

The path processing apparatus provided in the embodiment of this application can achieve each process in the method embodiment of FIG. 4. To avoid repetition, details are not described herein again. The communication performance of the communications device can be improved.

It should be noted that the path processing apparatus in this embodiment of this application may be an apparatus, or may be a component, an integrated circuit, or a chip in a network device.

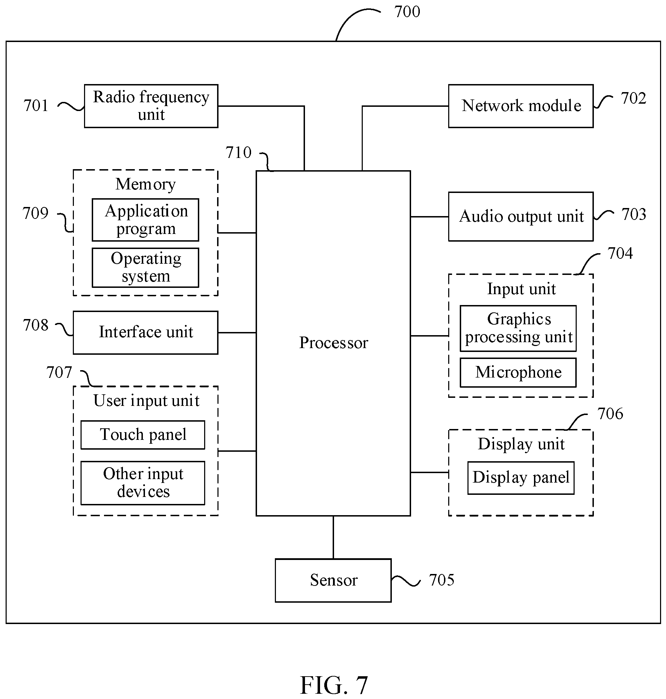

FIG. 7 is a schematic diagram of a hardware structure of a terminal for implementing embodiments of this application.

The terminal 700 includes but is not limited to components such as a radio frequency unit 701, a network module 702, an audio output unit 703, an input unit 704, a sensor 705, a display unit 706, a user input unit 707, an interface unit 708, a memory 708, and a processor 710.

It can be understood by those skilled in the art that the terminal 700 may further include a power supply (for example, a battery) supplying power to the components. The power supply may be logically connected to the processor 710 via a power management system, so that functions such as charge management, discharge management, and power consumption management are implemented by using the power management system. The structure of the electronic device shown in FIG. 7 does not constitute a limitation on the electronic device. The electronic device may include more or fewer components than those shown in the FIG., or some components may be combined, or there may be a different component layout. Details are not described herein again.

The radio frequency unit 701 is configured to obtain first indication information.

The processor 710 is configured to perform path reconfiguration for a multicast service according to the first indication information.

Optionally, the performing path reconfiguration for a multicast service includes:
reconfiguring a path state of the multicast service to a target path state.

Optionally, the target path state includes one of the following:
only point-to-multipoint PTM path being activated or configured;
only point-to-point PTP path being activated or configured;
both PTM and PTP paths being activated, or both PTM and PTP paths being configured; and
both PTM and PTP paths being deactivated, or both PTM and PTP paths being deconfigured.

Optionally, the radio frequency unit 701 is further configured to transmit a reception state report on the activated or configured PTP path in a case that a trigger condition is met.

Optionally, the trigger condition includes:
the target path state includes the PTP path being activated or configured; or
the target path state includes the PTP path being activated or configured, and the PTP path is configured to radio link control RLC acknowledgment mode AM; or
the target path state includes the PTP path being activated or configured, and the terminal receives second indication information, where the second indication information is used to instruct the terminal to report a reception state for receiving the multicast service; or
the target path state includes the PTP path being activated, and the first indication information is used to instruct the terminal to report a reception state of a path activated in the target path state.

Optionally, the processor 710 is further configured to determine an initial path state of the multicast service according to network configuration or protocol specifications.

Optionally, the initial path state includes one of the following:
only PTM path being activated or configured;
only PTP path being activated or configured;
both PTM and PTP paths being activated, or both PTM and PTP paths being configured; and
both PTM and PTP paths being deactivated, or both PTM and PTP paths being deconfigured.

Optionally, the network configuration includes at least one of the following configurations:
terminal-dedicated signaling, common signaling, and group signaling.

Optionally, when the network configuration includes the common signaling or group signaling and also includes the terminal-dedicated signaling, the common signaling or group signaling is used for configuring first configuration information of the PTM path, and the terminal-dedicated signaling is used for configuring at least one of the following:
second configuration information of the PTM path, and configuration information of the PTP path.

Optionally, the processor 710 is further configured to:
determine a default path state of the multicast service when the terminal receives notification information, where the notification information is used to notify the terminal to receive the multicast service, and the default path state is determined according to network configuration or protocol specifications.

Optionally, the first indication information includes at least one of the following:
multicast media access control control element MAC CE, multicast layer 1 L1 signaling, unicast MAC CE, unicast L1 signaling, and radio resource control RRC signaling.

Optionally, the first indication information is used to indicate at least one of the following:
identification information of the multicast service;
the target path state; and
configuration information of a target path corresponding to the target path state.

Optionally, the radio frequency unit 701 is further configured for the terminal to:
transmit acknowledgment information for the first indication information.

Optionally, after the performing path reconfiguration for a multicast service, the radio frequency unit 701 is further configured for the terminal to perform at least one of the following:
in a case that the target path state includes the PTP path being activated or configured, performing cell-radio network temporary identifier C-RNTI monitoring during a first time for the activated or configured PTP path;
in a case that the target path state includes the PTM path being activated or configured, performing group-radio network temporary identifier G-RNTI monitoring during a second time for the activated or configured PTM path;
in a case that the target path state includes the PTP path being deactivated or deconfigured, performing C-RNTI monitoring during a third time for the deactivated or deconfigured PTP path but without performing C-RNTI monitoring during a fourth time, where the third time includes activation or configuration time in the unicast discontinuous reception DRX pattern, and the fourth time includes a time that does not overlap with the third time in activation or configuration time of the group non-discontinuous reception DRX pattern corresponding to the multicast service; and
in a case that the target path state includes the PTM path being deactivated or deconfigured, suspending monitoring the multicast service or suspending G-RNTI monitoring during a second time for the deactivated or deconfigured PTM path.

Optionally, the first time includes a union of activation or configuration time in the group DRX pattern corresponding to the multicast service and activation or configuration time in the unicast DRX pattern, or in a case that DRX is not configured, the first time is all downlink moments; and
the second time includes activation or configuration time in the group DRX pattern corresponding to the multicast service, or in a case that DRX is not configured, the second time is all downlink moments.

Optionally, in a case that the PTP path activated or configured includes PTP paths of multiple groups of multicast services:
the first time includes a union of multiple activation or configuration times in the group DRX pattern of the multiple groups and activation or configuration time in the unicast DRX pattern, or in a case that DRX is not configured, the first time is all downlink moments;
   or,
in a case that the PTM path activated or configured includes PTM paths of multiple groups of multicast services:
   the second time includes multiple activation or configuration times in the group DRX pattern of the multiple groups, and the terminal performs corresponding G-RNTI monitoring within each activation or configuration time, or in a case that DRX is not configured, the second time is all downlink moments.

Optionally, before the terminal obtains the first indication information, the radio frequency unit 701 is further configured for the terminal to transmit tendency information transmitted by the terminal, where the tendency information is used to indicate power-saving tendency information of the terminal for the multicast service.

This embodiment can improve the multicast service capability of the terminal.

Optionally, an embodiment of the present invention further provides a terminal, including a processor 710, a memory 708, and a program or instructions stored in the memory 708 and capable of running on the processor 710, where when the program or instructions are executed by the processor 710, the processes of the foregoing embodiments of the path processing method are implemented, with the same technical effects achieved. To avoid repetition, details are not described herein again.

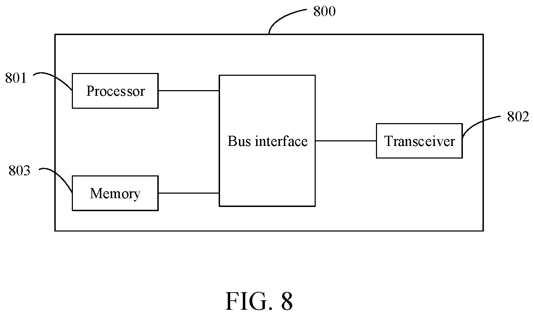

Referring to FIG. 8, FIG. 8 is a structural diagram of a network device provided in an embodiment of the present invention. The network device 800 includes a processor 801, a transceiver 802, a memory 803, and a bus interface.

The transceiver 802 is configured to transmit first indication information, where the first indication information is used for performing path reconfiguration for a multicast service by a terminal.

Optionally, the terminal performing path reconfiguration for a multicast service includes:
reconfiguring a path state of the multicast service to a target path state.

Optionally, the target path state includes one of the following:
only point-to-multipoint PTM path being activated or configured;
only point-to-point PTP path being activated or configured;
both PTM and PTP paths being activated, or both PTM and PTP paths being configured; and
both PTM and PTP paths being deactivated, or both PTM and PTP paths being deconfigured.

Optionally, the transceiver 802 is further configured to:
receive, on an activated or configured PTP path in a case that a trigger condition is met, a reception state report transmitted by the terminal.

Optionally, the trigger condition includes:
the target path state includes the PTP path being activated or configured; or
the target path state includes the PTP path being activated or configured, and the PTP path is configured to radio link control RLC acknowledgment mode AM; or
the target path state includes the PTP path being activated or configured, and the terminal receives second indication information, where the second indication information is used to instruct the terminal to report a reception state for receiving the multicast service; or
the target path state includes the PTP path being activated, and the first indication information is used to instruct the terminal to report a reception state of a path activated in the target path state.

Optionally, the transceiver 802 is further configured to:
configure an initial path state of the multicast service for the terminal.

Optionally, the initial path state includes one of the following:
only PTM path being activated or configured;
only PTP path being activated or configured;
both PTM and PTP paths being activated, or both PTM and PTP paths being configured; and
both PTM and PTP paths being deactivated, or both PTM and PTP paths deconfigured.

Optionally, the configuring an initial path state of the multicast service for the terminal includes:
configuring an initial path state of the multicast service for the terminal through at least one of the following:
terminal-dedicated signaling, common signaling, and group signaling.

Optionally, when the network configuration includes the common signaling or group signaling and also includes the terminal-dedicated signaling, the common signaling or group signaling is used for configuring first configuration information of the PTM path, and the terminal-dedicated signaling is used for configuring at least one of the following:
second configuration information of the PTM path, and configuration information of the PTP path.

Optionally, the transceiver 802 is further configured to:
transmit notification information to the terminal, where the notification information is used to inform the terminal to receive the multicast service.

Optionally, the first indication information includes at least one of the following:
multicast media access control control element MAC CE, multicast layer 1 L1 signaling, unicast MAC CE, unicast L1 signaling, and radio resource control RRC signaling.

Optionally, the first indication information is used to indicate at least one of the following:
identification information of the multicast service;
the target path state; and
configuration information of a target path corresponding to the target path state.

Optionally, the network device retransmits the first indication information, or
the network device transmits, within a same cycle, the first indication information for reconfiguring a same path state; or
the transceiver 802 is further configured to receive acknowledgment information for the first indication information transmitted by the terminal.

Optionally, before the network device transmits the first indication information, the transceiver 802 is further configured for the network device to:
receive tendency information transmitted by the terminal, where the tendency information is used to indicate power-saving tendency information of the terminal for the multicast service.

This embodiment can improve the multicast service capability of the terminal.

The transceiver 802 is configured to receive and transmit data under control of the processor 801. The transceiver 802 includes at least two antenna ports.

In FIG. 8, a bus architecture may include any quantity of interconnected buses and bridges, and specifically connect together various circuits of one or more processors represented by the processor 801 and a memory represented by the memory 803. The bus architecture may further interconnect various other circuits such as a peripheral device, a voltage regulator, and a power management circuit. These are all well known in the art, and therefore are not further described in this specification. A bus interface provides interfaces. The transceiver 802 may be a plurality of elements, including a transmitter and a receiver, and provides units configured to perform communication with various other apparatuses over a transmission medium. For different user equipments, the user interface 804 may also be an interface for externally or internally connecting a required device, and the connected device includes but is not limited to a mini keyboard, a display, a speaker, a microphone, a joystick, or the like.

The processor 801 is responsible for management of the bus architecture and general processing, and the memory 803 is capable of storing data that is used by the processor 801 during operation.

Preferably, an embodiment of this application further provides a network device, including a processor 801, a memory 803, and a program or instructions stored in the memory 803 and capable of running on the processor 801. When the program or instructions are executed by the processor 801, the processes of the foregoing embodiments of the path processing method are implemented, with the same technical effects achieved. To avoid repetition, details are not described herein again.

An embodiment of this application provides a readable storage medium, where a program or instructions is stored in the readable storage medium, and when the program or instructions are executed by a processor, the steps of the path processing method on the terminal side provided in the embodiments of this application are implemented; or when the program or instructions are executed by a processor, the steps of the path processing method on the network device side provided in the embodiments of this application are implemented.

An embodiment of this application further provides a program product. The program product is stored in a non-volatile storage medium, and the program product is executed by at least one processor to implement the steps of the path processing method on the terminal side or the path processing method on the network device side provided in the embodiments of this application.

The processor is the processor in the terminal or network device in the foregoing embodiments. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip, where the chip includes a processor and a communications interface. The communications interface is coupled to the processor, and the processor is configured to run a program or instructions to implement the processes of the foregoing embodiments of the path processing method on the terminal side provided in the embodiments of this application or the processes of the step embodiments of the path processing method on the network device side provided in the embodiments of this application, with the same technical effects achieved. To avoid repetition, details are not described herein again.

It should be understood that the chip in the embodiments of this application may also be referred to as a system-level chip, a system chip, a chip system, a system on chip, or the like.

An embodiment of this application further provides a computer program product, which is stored in a non-volatile storage medium. The computer program product is executed by at least one processor to implement the processes of the path processing method embodiments on the terminal side provided in the embodiments of this application, or the processes of the step embodiments of the path processing method on the network device side provided in the embodiments of this application, with the same technical effects achieved. To avoid repetition, details are not described herein again.

It should be noted that in this specification, the term "include", "comprise", or any one of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a... " does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially, or the part contributing to the prior art may be implemented in a form of a software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A path processing method, comprising:
obtaining, by a terminal, first indication information; and
performing, by the terminal, path reconfiguration for a multicast service according to the first indication information.

2. The method according to claim 1, wherein the performing path reconfiguration for a multicast service comprises:
reconfiguring a path state of the multicast service to a target path state.

3. The method according to claim 2, wherein the target path state comprises one of the following:
only point-to-multipoint PTM path being activated or configured;
only point-to-point PTP path being activated or configured;
both PTM and PTP paths being activated, or both PTM and PTP paths being configured; and
both PTM and PTP paths being deactivated, or both PTM and PTP paths being deconfigured.

4. The method according to claim 3, wherein the method further comprises:
transmitting, by the terminal, a reception state report on an activated or configured PTP path in a case that a trigger condition is met.

5. The method according to claim 4, wherein the trigger condition comprises:
the target path state comprises the PTP path being activated or configured; or
the target path state comprises the PTP path being activated or configured, and the PTP path is configured to radio link control RLC acknowledgment mode AM; or
the target path state comprises the PTP path being activated or configured, and the terminal receives second indication information, wherein the second indication information is used to instruct the terminal to report a reception state for receiving the multicast service; or
the target path state comprises the PTP path being activated, and the first indication information is used to instruct the terminal to report a reception state of a path activated in the target path state.

6. The method according to claim 1, wherein the method further comprises:
determining, by the terminal, an initial path state of the multicast service according to network configuration or protocol specifications.

7. The method according to claim 6, wherein the initial path state comprises one of the following:
only PTM path being activated or configured;
only PTP path being activated or configured;
both PTM and PTP paths being activated or configured; and
both PTM and PTP paths being deactivated or deconfigured.

8. The method according to claim 1, wherein the method further comprises:
when the terminal receives notification information, determining a default path state of the multicast service, wherein the notification information is used to notify the terminal to receive the multicast service, and the default path state is determined according to network configuration or protocol specifications.

9. The method according to any one of claims 1 to 8, wherein the first indication information comprises at least one of the following:
multicast media access control control element MAC CE, multicast layer 1 L1 signaling, unicast MAC CE, unicast L1 signaling, and radio resource control RRC signaling.

10. The method according to any one of claims 2 to 5, wherein the first indication information is used to indicate at least one of the following:
identification information of the multicast service;
the target path state; and
configuration information of a target path corresponding to the target path state.

11. The method according to any one of claims 1 to 8, wherein the method further comprises:
transmitting, by the terminal, acknowledgment information for the first indication information.

12. The method according to any one of claims 2 to 5, wherein after the performing path reconfiguration for a multicast service, the method further comprises at least one of the following:
in a case that the target path state comprises the PTP path being activated or configured, the terminal performs cell-radio network temporary identifier C-RNTI monitoring during a first time for the activated or configured PTP path;
in a case that the target path state comprises the PTM path being activated or configured, the terminal performs group-radio network temporary identifier G-RNTI monitoring during a second time for the activated or configured PTM path;
in a case that the target path state comprises the PTP path being deactivated or deconfigured, the terminal performs C-RNTI monitoring during a third time for the deactivated or deconfigured PTP path but does not perform C-RNTI monitoring during a fourth time, wherein the third time comprises activation or configuration time in the unicast DRX pattern, and the fourth time comprises a time that does not overlap with the third time in activation or configuration time of the group non-discontinuous reception DRX pattern corresponding to the multicast service; and
in a case that the target path state comprises the PTM path being deactivated or deconfigured, the terminal suspends monitoring the multicast service or suspends G-RNTI monitoring during a second time for the deactivated or deconfigured PTM path.

13. The method according to claim 12, wherein the first time comprises a union of activation or configuration time in the group DRX pattern corresponding to the multicast service and activation or configuration time in the unicast DRX pattern, or in a case that DRX is not configured, the first time is all downlink moments; and
the second time comprises activation or configuration time in the group DRX pattern corresponding to the multicast service, or in a case that DRX is not configured, the second time is all downlink moments.

14. The method according to claim 13, wherein in a case that the PTP path activated or configured comprises PTP paths of multiple groups of multicast services:
the first time comprises a union of multiple activation or configuration times in the group DRX pattern of the multiple groups and activation or configuration time in the unicast DRX pattern, or in a case that DRX is not configured, the first time is all downlink moments;
or,
in a case that the PTM path activated or configured comprises PTM paths of multiple groups of multicast services:
the second time comprises multiple activation or configuration times in the group DRX pattern of the multiple groups, and the terminal performs corresponding G-RNTI monitoring within each activation or configuration time, or in a case that DRX is not configured, the second time is all downlink moments.

15. The method according to any one of claims 1 to 8, wherein before the obtaining, by a terminal, first indication information, the method further comprises:
transmitting, by the terminal, tendency information, wherein the tendency information is used to indicate power-saving tendency information of the terminal for the multicast service.

16. A path processing method, comprising:
transmitting, by a network device, first indication information, wherein the first indication information is used for performing path reconfiguration for a multicast service by a terminal.

17. The method according to claim 16, wherein the performing path reconfiguration for a multicast service by a terminal comprises:
reconfiguring a path state of the multicast service to a target path state.

18. The method according to claim 17, wherein the target path state comprises one of the following:
only point-to-multipoint PTM path being activated or configured;
only point-to-point PTP path being activated or configured;
both PTM and PTP paths being activated, or both PTM and PTP paths being configured; and
both PTM and PTP paths being deactivated, or both PTM and PTP paths being deconfigured.

19. The method according to claim 18, wherein the method further comprises:
in a case that a trigger condition is met, receiving, by the network device on an activated or configured PTP path, a reception state report transmitted by the terminal.

20. The method according to claim 19, wherein the trigger condition comprises:
the target path state comprises the PTP path being activated or configured; or
the target path state comprises the PTP path being activated or configured, and the PTP path is configured to radio link control RLC acknowledgment mode AM; or
the target path state comprises the PTP path being activated or configured, and the terminal receives second indication information, wherein the second indication information is used to instruct the terminal to report a reception state for receiving the multicast service; or
the target path state comprises the PTP path being activated, and the first indication information is used to instruct the terminal to report a reception state of a path activated in the target path state.

21. The method according to claim 16, wherein the method further comprises:
configuring, by the network device, an initial path state of the multicast service for the terminal.

22. The method according to claim 21, wherein the initial path state comprises one of the following:
only PTM path being activated or configured;
only PTP path being activated or configured;
both PTM and PTP paths being activated or configured; and
both PTM and PTP paths being deactivated or deconfigured.

23. The method according to claim 16, wherein the method further comprises:
transmitting, by the network device, notification information to the terminal, wherein the notification information is used to inform the terminal to receive the multicast service.

24. The method according to any one of claims 16 to 23, wherein the first indication information comprises at least one of the following:
multicast media access control control element MAC CE, multicast layer 1 L1 signaling, unicast MAC CE, unicast L1 signaling, and radio resource control RRC signaling.

25. The method according to any one of claims 17 to 20, wherein the first indication information is used to indicate at least one of the following:
identification information of the multicast service;
the target path state; and
configuration information of a target path corresponding to the target path state.

26. The method according to any one of claims 16 to 23, wherein the network device retransmits the first indication information; or
the network device transmits, within a same cycle, the first indication information for reconfiguring a same path state; or
the method further comprises:
receiving, by the network device, acknowledgment information for the first indication information transmitted by the terminal.

27. The method according to any one of claims 16 to 23, wherein before the transmitting, by a network device, first indication information, the method further comprises:
receiving, by the network device, tendency information transmitted by the terminal, wherein the tendency information is used to indicate power-saving tendency information of the terminal for the multicast service.

28. A path processing apparatus comprising:
an obtaining module configured to obtain first indication information; and
an execution module configured to perform path reconfiguration for a multicast service according to the first indication information.

29. The apparatus according to claim 28, wherein the execution module is configured to reconfigure a path state of the multicast service to a target path state according to the first indication information.

30. A path processing apparatus comprising:
a transmitting module configured to transmit first indication information, where the first indication information is used for performing path reconfiguration for a multicast service by a terminal.

31. The apparatus according to claim 30, wherein the apparatus further comprises:
a configuration module configured to configure an initial path state of the multicast service for the terminal.

32. A terminal, comprising a memory, a processor, and a program or instructions stored in the memory and capable of running on the processor, wherein when the program or instructions are executed by the processor, the steps of the path processing method according to any one of claims 1 to 15 are implemented.

33. A network device, including a memory, a processor, and a program or instructions stored in the memory and capable of running on the processor, where when the program or instructions are executed by the processor, the steps of the path processing method according to any one of claims 16 to 27 are implemented.

34. A readable storage medium, wherein the readable storage medium stores a program or instructions, and when the program or instructions are executed by a processor, the steps of the path processing method according to any one of claims 1 to 15 are implemented, or when the program or instructions are executed by a processor, the steps of the path processing method according to any one of claims 16 to 27 are implemented.

35. A chip, wherein the chip comprises a processor and a communications interface, the communications interface is coupled to the processor, and the processor is configured to run a program or instructions of a network device, to implement the steps of the path processing method according to any one of claims 1 to 15, or implement the steps of the path processing method according to any one of claims 16 to 27.

36. A computer program product, wherein the computer program product is stored in a non-volatile storage medium, and when the computer program product is executed by at least one processor, the steps of the path processing method according to any one of claims 1 to 15 are implemented; or when the program or instructions are executed by a processor, the steps of the path processing method according to any one of claims 16 to 27 are implemented.
